# EUROPÄISCHE PATENTSCHRIFT

(11) **EP 1 825 183 B1**
(45) Veröffentlichungstag und Bekanntmachung des Hinweises auf die Patenterteilung: **20.02.2013**
(21) Anmeldenummer: 05813393.5
(22) Anmeldetag: 01.12.2005
(51) Int. Cl.: F16L 55/165, B29C 63/34

(54) **HERSTELLUNG EINES HARZGETRÄNKTEN FASERSCHLAUCHES ZUR INNENAUSKLEIDUNG VON KANÄLEN UND ROHRLEITUNGEN**
PRODUCTION OF A RESIN-IMPREGNATED FIBER TUBE FOR INTERNALLY LINING CONDUITS AND PIPES OR PIPE SYSTEMS
PRODUCTION D'UN FLEXIBLE TUBULAIRE FIBREUX POUR HABILLER L'INTERIEUR DE CONDUITES ET DE CANALISATIONS

(30) Priorität: 10.12.2004 DE 102004059883
(43) Veröffentlichungstag der Anmeldung: 29.08.2007
(73) Patentinhaber: Brandenburger Patentverwertung GdbR., 76829 Landau (DE)
(72) Erfinder: NOLL, Christian, 67117 Limburgerhof (DE)
(74) Vertreter: Kesselhut, Wolf
(86) Internationale Anmeldenummer: PCT/EP2005/012792
(87) Internationale Veröffentlichungsnummer: WO 2006/061129

(56) Entgegenhaltungen:
- EP-A- 0 826 817
- EP-B- 0 023 634
- EP-B- 0 712 352
- EP-B- 0 799 397
- WO-A-01/81805

## Beschreibung

Die Erfindung betrifft ein Verfahren zur Herstellung eines harzgetränkten Faserschlauches zur Innenauskleidung von Kanälen und Rohrleitungen durch Imprägnieren eines Faserschlauches oder eines Faserbandes mit einem Reaktionsharz.

Ein besonders elegantes Verfahren zum Sanieren von erdverlegten Abwasserkanälen, Wasserleitungen und ähnlichen Rohrsystemen besteht darin, dass man einen flexiblen, mit Reaktionsharz getränkten Faserschlauch in das Rohr einführt, dort aufbläst und danach das Harz aushärtet. Problematisch ist dabei, dass das flüssige Harz aus dem Faserschlauch nach dem Tränken auslaufen oder sich zumindest an der Unterseite des Schlauches ansammeln kann. \

In der EP-B 799 397, die als nächstliegender Stand der Technik angesehen wird, wird deshalb vorgeschlagen, einen dreilagigen Glasfaserschlauch mit einer Innenlage aus einer voluminösen Fasermatte und zwei Außenlagen aus einem Fasergewebe mit einem niederviskosen Reaktionsharz zu tränken und eine Außenschicht durch UV- Bestrahlung zu gelieren. Die Herstellung eines dreilagigen Faserschlauches ist natürlich aufwendig, außerdem besteht die Gefahr, dass das Harz in der voluminösen Innenlage sich beim Lagern nach unten absetzt, so dass eine ungleichmäßige Imprägnierung erhalten wird.

In der selben Druckschrift ist auch eine alternative Arbeitsweise beschrieben. Danach kann man die Viskosität des Harzes nach dem Imprägnieren durch Thixotropiermittel oder Eindickmittel erhöhen um das Auslaufen zu verhindern. Diese Verfahrensweise wird aber als nachteilig bezeichnet, da hierbei die Geschwindigkeit der Imprägnierung erheblich gebremst würde und eine nicht vollständige Benetzung der einzelnen Fasern erfolge. Außerdem würde beim Aufwickeln oder Falten des imprägnierten Schlauches das Harz an den Faltbereichen herausgepresst.

Im Dokument WO 01/81805 A2 wird die Reparatur von Rohrleitungsschnittstellen mit Fasermaterial beschrieben, welches mit einem Harz, das ein zeitlich verzögert wirkendes Additiv zur Erhöhung seiner Viskosität aufweist, getränkt wird. Das Harz wird nach Plazierung an der zu reparierenden Rohrleitungsschnittstelle ausgehärtet.

Das Dokument EP 0 826 817 A1 betrifft eine bandartige Versiegelungsbeschichtung. Die Beschichtung umfasst eine netzartige Basis und ein plastisches oder knetbares Material, das in den Öffnungen der Basis aufgenommen ist. Es werden zwei Gruppen von geeigneten Polymeren für das knetbare Material beschrieben: Polyalkene und Polysiloxane.

Im Dokument EP 23 634 B1 wird ein Verfahren zur Herstellung von Formkörpern aus ungesättigten Polyesterharzen offenbart, bei dem in einer ersten Stufe ein lagerfähiges klebfreies Halbzeug hergestellt wird und dann in einer zweiten Stufe das Halbzeug nach einem beliebigen Verfahren verformt und schließlich ausgehärtet wird. In bestimmten Ausführungsformen wird ein faserförmiges Verstärkungsmaterial verwendet. Es wird eine Vielzahl von Beispielen angegeben, welche Stoffe als Komponente des Ausgangsgemisches zum Einsatz gelangen können.

Das Dokument EP 0 712 352 B1 betrifft ein Verfahren zum Herstellen eines rohrförmigen Auskleidungsschlauchs für die Sanierung von Kanälen oder Rohrleitungen. Dazu werden eines oder mehrere Faserbänder zu einem aushärtbaren, harzgetränkten Schlauch auf einem inneren Folienschlauch geformt, indem das oder die harzgetränkten Faserbänder auf den Folienschlauch aufgewickelt werden. Der Wickelvorgang findet auf einem Wickeldorn statt, der wenigstens zwei parallel zueinander angeordnete Wickelfinger aufweist, deren Abstand radial zur Wickeldornachse veränderbar ist.

Ausgehend von diesem Verfahrensprinzip stellte sich bei der vorliegenden Erfindung die Aufgabe, die genannten Nachteile zu vermeiden und ein einfaches Verfahren zur Herstellung eines harzgetränkten Faserschlauches zu entwickeln. Diese Aufgabe wird erfindungsgemäß dadurch gelöst, dass man sowohl beim Ausgangsharz als auch beim eingedickten Harz optimale Viskositäten einstellt.

Gegenstand der Erfindung ist demzufolge ein Verfahren zur Herstellung eines harzgetränkten Faserschlauches zur Innenauskleidung von Kanälen und Rohrleitungen durch Imprägnieren eines Faserbandes gemäß Anspruch 1.

Faserband und Faserschlauch werden im folgenden gemeinsam als "Fasergebilde" bezeichnet. Dieses kann z.B. ein Gewebe, ein Gelege, eine Matte, ein Nadelvlies oder ein Filz oder Kombinationen davon sein, und aus Glasfasern oder Synthesefasern bestehen.

Das Reaktionsharz kann eine Lösung eines ungesättigten Polyesters oder eines Vinylesters in Styrol und/oder einem Acrylester sein.

In einer bevorzugten Ausführungsform besteht das Fasergebilde aus einem Glasfasergewebe oder einer Glasfasermatte oder Kombinationen davon. In diesem Fall wird ein chemisches Eindickmittel, vorzugsweise ein Oxid oder Hydroxid von Magnesium oder Calcium eingesetzt, z.B. LUVATOL der Fa. Lehmann & Voss, und zwar vorzugsweise in Mengen von 0,2 bis 5 Gew.%, insbesondere von 0,3 bis 1 Gew.% Feststoff, bezogen auf das Harz. Das Eindickmittel kann entweder als pulverförmiger Feststoff eingesetzt werden oder als eine in einem flüssigen Trägermaterial dispergierten Paste. Es wird kurz vor dem Imprägnieren in das Harz eingerührt.

Das Imprägnieren geschieht vorzugsweise dadurch, dass das Fasergebilde langsam durch ein Bad gezogen wird, das mit dem flüssigen, auf die "richtige" Viskosität eingestellten Harz gefüllt ist, oder dass man auf das Fasergebilde das Harz aufrakelt oder aufsprüht oder als flüssigen Film aufträgt. Danach lässt man das Harz eindicken, indem man das imprägnierte Fasergebilde längere Zeit, vorzugsweise mindestens einen Tag, insbesondere mehrere Tage lang bei Raumtemperatur stehen lässt oder mehrere Stunden lang auf Temperaturen von maximal 80 °C erwärmt.

Bei einer anderen Ausführungsform ist das Fasergebilde ein Polyesterfaserfilz. Da Filz sehr dicht ist, kann hier auf das Eindickmittel verzichtet werden und zur Viskositätserhöhung genügt zum Verdicken ein Thixotropiermittel, z.B. WACKER HDK der Fa. Wacker- Chemie oder AEROSIL der Fa. Degussa, welche als physikalische Verdickungsmittel durch Wasserstoffbrückenbindung wirken.

Das wesentliche Merkmal der vorliegenden Erfindung ist die optimale Abstimmung der Viskositäten während und nach dem Imprägnieren. Während des Imprägnierens soll die Viskosität erfindungsgemäß zwischen 200 und 20.000 mPa s liegen. Ist die Viskosität zu niedrig, dann separiert sich die Harzlösung in dem Fasergebilde; ist sie zu hoch dann wird das Fasergebilde nicht ausreichend imprägniert.

Die Viskosität hängt von der Art des Harzes und von der Temperatur beim Imprägnieren ab, sie kann zum Beispiel durch die Auswahl des Polyesters bzw. Vinylesters und die Konzentration der Harzlösung gezielt eingestellt werden. Je höher die Temperatur des Bades beim Imprägnieren ist, desto niedriger ist die Viskosität. Bevorzugt wird zwischen 15 und 30 °C. imprägniert.

Nach dem Imprägnieren soll die Viskosität erfindungsgemäß auf 50.000 bis 2.000.000 mPa s ansteigen. Ist hier die Viskosität zu niedrig, dann wird beim Aufblasen des imprägnierten Faserschlauches in der Rohrleitung das Harz aus dem Faserschlauch herausgedrückt; ist sie zu hoch, dann ist die Fließfähigkeit des Harzes im imprägnierten Faserschlauch zu gering, so dass beim Aushärten des Harzes Lunker und Oberflächendefekte entstehen. Die optimale Endviskosität kann durch Wahl der Art und Menge des Eindickmittels gezielt eingestellt werden.

Bei der Erfindung geht man von einem dünnflüssigen Harz aus und setzt diesem ein Thixotropiermittel, vorzugsweise in Mengen von 0,5 bis 5 Gew.%, bezogen auf das Harz, zu. Nach Zugabe des Thixotropiermittels steigt die Viskosität sehr schnell auf die bevorzugte Imprägnierviskosität von 1.000 bis 10.000 mPa s, insbesondere von 2.000 bis 8.000 mPa s, an. Nach dem Imprägnieren wird durch Einwirken des chemischen Eindickmittels auf die bevorzugte Endviskosität von 100.000 bis 1.000.000 mPa s, insbesondere von 200.000 bis 800.000 mPa s eingedickt.

Bei der alternativen Ausführungsform mit physikalischem Eindickmittel beträgt die bevorzugte Endviskosität 50.000 bis 200.000 mPa s. Sie kann ebenfalls durch Art und Menge des Thixotropiermittels eingestellt werden.

Die optimale Art und Menge der Eindickmittel und der Thixotropiermittel kann durch Vorversuche einfach ermittelt werden.

Als Reaktionsharz wird bevorzugt ein lichthärtendes Harz verwendet. Dieses enthält einen Photoinitiator, wie z.B. in EP-B 23 634 beschrieben. Dort finden sich auch weitere Einzelheiten über die Reaktionsharze und die Eindickmittel, sowie über die Eindickung und die Aushärtung der Harze mit Hilfe von UV- Licht.

In einer anderen Ausführungsform wird ein radikalisch härtbares Reaktionsharz verwendet, welches einen Peroxidinitiator enthält. Hier erfolgt die Aushärtung durch Erhöhung der Temperatur über die Zerfallstemperatur des Peroxids bzw. bei kalthärtenden Harzen durch Zusatz eines Beschleunigers.

Beim dem erfindungsgemäßen Verfahren kann man entweder von einem Faserband ausgehen, dieses imprägnieren, eindicken und um einen Wickeldorn zu einem Faserschlauch wickeln, wie es z.B. in der EP-B 712 352 beschrieben ist. Alternativ kann man auch von einem fertigen Faserschlauch ausgehen und diesen direkt imprägnieren und eindicken. Der imprägnierte Faserschlauch kann innen und außen mit Folien versehen und gelagert werden. Zur Sanierung von Rohrleitungen und Kanälen wird er in diese eingezogen, dort aufgeblasen, so dass er sich an die Innenwand anschmiegt und das Harz wird entweder mittels UV- Bestrahlung oder radikalisch durch Temperaturerhöhung, z.B. mit heißem Wasser gehärtet.

## Patentansprüche

1. Verfahren zur Herstellung eines harzgetränkten Faserschlauches zur Innenauskleidung von Kanälen und Rohrleitungen durch Imprägnieren eines Faserbandes mit einem Reaktionsharz und Wickeln des Faserbandes um einen Wickeldorn, oder durch Imprägnieren eines vorgefertigten Faserschlauches mit einem Reaktionsharz, wobei das Reaktionsharz während des Imprägnierens eine Viskosität von 200 bis 20.000 mPa s aufweist und nach dem Imprägnieren so verdickt wird, dass seine Viskosität 50.000 bis 2.000.000 mPa·s beträgt, das Faserband oder der Faserschlauch aus Glasfasern besteht, und das Harz als Eindickmittel ein Oxid oder Hydroxid von Magnesium oder Calcium enthält, **dadurch gekennzeichnet, dass** man einem dünnflüssigen Harz erst ein Thixotropiermittel zusetzt, wobei sich die bevorzugte Imprägnierviskosität von 1.000 bis 10.000 mPa s einstellt, und dass man nach dem Imprägnieren durch Einwirken des Eindickmittels auf eine Endviskosität von vorzugsweise 100.000 bis 1.000.000 mPa s verdickt.

2. Verfahren nach Anspruch 1, **dadurch gekennzeichnet, dass** zum Imprägnieren das Faserband oder der Faserschlauch durch ein Bad mit dem Harz gezogen wird oder dass das Harz auf das Faserband oder den Faserschlauch aufgerakelt oder aufgesprüht wird.

3. Verfahren nach Anspruch 1, **dadurch gekennzeichnet, dass** das Faserband oder der Faserschlauch aus einem Gewebe, einem Gelege, einer Matte, einem Nadelvlies oder einem Filz oder Kombinationen davon, aus Glasfasern oder Synthesefasern besteht.

4. Verfahren nach Anspruch 1, **dadurch gekennzeichnet, dass** das Harz eine Lösung eines ungesättigten Polyesters oder eines Vinylesters in Styrol und/oder einem Acrylester ist.

5. Verfahren nach Anspruch 1, **dadurch gekennzeichnet, dass** das Harz 0,2 bis 5 Gew.% des Eindickmittels in Form eines pulverförmigen Feststoffs oder in Form einer in einem flüssigen Trägermaterial dispergierten Paste enthält.

6. Verfahren nach Anspruch 1, **dadurch gekennzeichnet, dass** das Verdicken durch mehrtägiges Lagern des imprägnierten Faserschlauches bei Raumtemperatur oder durch mehrstündiges Erwärmen erfolgt.

7. Verfahren nach Anspruch 1, **dadurch gekennzeichnet, dass** das Faserband oder der Faserschlauch ein Filz aus Polyesterfasern ist, und das Harz zum Verdicken das Thixotropiermittel enthält. Verfahren nach Anspruch 1, **dadurch gekennzeichnet, dass** das Reaktionsharz ein lichthärtbares Harz ist und einen Photoinitiator enthält.

8. Verfahren nach Anspruch 1, **dadurch gekennzeichnet, dass** das das Thixotropiermittel pyrogene Kieselsäure ist.

9. Verfahren nach Anspruch 1, **dadurch gekennzeichnet, dass** das Reaktionsharz ein lichthärtbares Harz ist und einen Photoinitiator enthält.

10. Verfahren nach Anspruch 1, **dadurch gekennzeichnet, dass** das Reaktionsharz ein radikalisch härtbares Harz ist und einen Peroxidinitiator enthält.

## Claims

1. Method for producing a resin-soaked fibre tube for the internal lining of conduits and pipelines by impregnating a fibre band with a reactive resin and winding the fibre band around a winding mandrel, or by impregnating a pre-manufactured fibre tube with a reactive resin, whereby the reactive resin comprises a viscosity of 200 to 20,000 mPa.s during impregnation and thickens after impregnation such that its viscosity is 50,000 to 2,000,000 mPa.s and whereby the fibre band or fibre tube consists of glass fibres and the resin contains as its thickening agent an oxide or hydroxide of magnesium or calcium, **characterised in that** a thixotropic agent is added firstly to a low viscosity resin, whereby the preferred impregnating viscosity is set at 1000 to 10,000 mPa.s, and that, after impregnation, thickening is achieved by the effect of the thickening agent to reach a final viscosity of preferably 100,000 to 1,000,000 mPa.s.

2. Method according to claim 1, **characterised in that** a bath is used for the impregnation of the fibre band or fibre tube with the resin or that the resin is spread out or sprayed on the fibre band or fibre tube.

3. Method according to claim 1, **characterised in that** the fibre band or fibre tube consists of a woven fabric, non-crimped fabric, matting, needle-punched non-woven or a combination of these, made from glass fibres or synthetic fibres.

4. Method according to claim 1, **characterised in that** the resin is a solution of an unsaturated polyester or of a vinyl ester in styrol and/or an acrylic ester.

5. Method according to claim 1, **characterised in that** the resin contains 0.2 to 5% by weight of the thickening agent in the form of a powdery solid or in the form of a paste dispersed in a liquid carrier material.

6. Method according to claim 1, **characterised in that** the thickening occurs by storing the impregnated fibre tube at room temperature for several days or by warming for several hours.

7. Method according to claim 1, **characterised in that** the fibre band or fibre tube is a non-woven of polyester fibres and the resin contains the thixotropic agent to thicken it. Method according to claim 1, **characterised in that** the reactive resin is a light-curing resin and contains a photoinitiator.

8. Method according to claim 1, **characterised in that** the thixotropic agent is pyrogenic silicic acid.

9. Method according to claim 1, **characterised in that** the reactive resin contains a light-curing resin and a photoinitiator.

10. Method according to claim 1, **characterised in that** the reactive resin is a radical-curing resin and contains a peroxide initiator.

## Revendications

1. Procédé de fabrication d'un flexible tubulaire fibreux imprégné de résine destiné à habiller l'intérieur de conduites et de canalisations, par imprégnation d'un ruban fibreux avec une résine de réaction et bobinage du ruban fibreux sur un mandrin de bobinage, ou par imprégnation d'un flexible tubulaire préfabriqué avec une résine de réaction, dans lequel la résine de réaction a une viscosité de 200 à 20.000 mPa s pendant l'imprégnation et est épaissie après l'imprégnation de façon que sa viscosité soit de 50.000 à 2.000.000 mPa s, le ruban fibreux ou le flexible tubulaire fibreux est en fibres de verre et la résine contient comme agent épaississant un oxyde ou hydroxyde de magnésium ou de calcium, **caractérisé en ce qu'**on ajoute d'abord à une résine fluide un agent thixotrope, ce qui donne la viscosité d'imprégnation préférée de 1.000 à 10.000 mPa s, et **en ce qu'**après l'imprégnation, grâce à l'action de l'agent épaississant, on épaissit jusqu'à obtenir une viscosité finale de préférence comprise entre 100.000 et 1.000.000 mPa s.

2. Procédé selon la revendication 1, **caractérisé en ce que** pour réaliser l'imprégnation, on passe le ruban fibreux ou le flexible tubulaire fibreux dans un bain contenant la résine ou on applique la résine à la racle ou par pulvérisation sur le ruban fibreux ou le flexible tubulaire fibreux.

3. Procédé selon la revendication 1, **caractérisé en ce que** le ruban fibreux ou le flexible tubulaire fibreux est constitué d'un tissu, d'une nappe, d'un mat, d'un non-tissé aiguilleté ou d'un feutre ou de combinaisons de ceux-ci, en fibres de verre ou fibres synthétiques.

4. Procédé selon la revendication 1, **caractérisé en ce que** la résine est une solution d'un polyester non saturé ou d'un vinylester dans le styrène et/ou un acrylester.

5. Procédé selon la revendication 1, **caractérisé en ce que** la résine contient 0,2 à 5 % en poids de l'agent épaississant sous la forme d'une matière solide pulvérulente ou sous la forme d'une pâte dispersée dans un matériau support liquide.

6. Procédé selon la revendication 1, **caractérisé en ce que** l'épaississement est opéré par stockage du flexible tubulaire fibreux imprégné pendant plusieurs jours à température ambiante ou par chauffage pendant plusieurs heures.

7. Procédé selon la revendication 1, **caractérisé en ce que** le ruban fibreux ou le flexible tubulaire fibreux est un feutre en fibres de polyester, et la résine contient l'agent thixotrope pour obtenir l'épaississement.

8. Procédé selon la revendication 1, **caractérisé en ce que** l'agent thixotrope est de l'acide silicique pyrogène.

9. Procédé selon la revendication 1, **caractérisé en ce que** la résine de réaction est une résine photodurcissable et contient un photoinitiateur.

10. Procédé selon la revendication 1, **caractérisé en ce que** la résine de réaction est une résine durcissable par voie radicalaire et contient un initiateur à base de péroxyde.
